# EUROPEAN PATENT APPLICATION

(11) **EP 3 499 149 A1**
(43) Date of publication of application: **19.06.2019**
(21) Application number: 17838948.2
(22) Date of filing: 18.01.2017
(51) Int. Cl.: F25B 13/00

(54) **AIR CONDITIONER**

(30) Priority: 12.08.2016 JP 2016158390
(71) Applicant: Sharp Kabushiki Kaisha, Sakai City, Osaka 590-8522 (JP)
(72) Inventor: UENO, Madoka, Sakai City Osaka 590-8522 (JP); KURAMOCHI, Yuri, Sakai City Osaka 590-8522 (JP)
(74) Representative: Treeby, Philip David William
(86) International application number: PCT/JP2017/001530
(87) International publication number: WO 2018/029872

(57) **Abstract**

Provided herein is an air conditioner (1) that includes an indoor heat exchanger (32), an outdoor heat exchanger (14), an expansion valve (15), a compressor (12), and a control unit (100) . The control unit (100) increases the degree of opening of the expansion valve (15) before switching a defrosting operation to a heating operation.

## Description

### Technical Field

An aspect of the present invention relates to a technology for an air conditioner that includes an indoor heat exchanger, an outdoor heat exchanger, an expansion valve, and a compressor.

### Background Art

An air conditioner is typically installed with a refrigeration cycle joined by components such as a compressor, an outdoor heat exchanger, an expansion valve, an indoor heat exchanger, and a switching valve. In such an air conditioner, the refrigeration cycle can switch between a cooling and defrosting operation cycle and a heating operation cycle by switching of a switching valve.

In a cooling and defrosting operation cycle, a refrigerant circulates through the compressor, the switching valve, the outdoor heat exchanger (condenser), the expansion valve, the indoor heat exchanger (evaporator), the switching valve, and the compressor, in this order, and the room heat absorbed by the indoor heat exchanger is released to outside through the outdoor heat exchanger.

In a heating operation cycle, a refrigerant circulates through the compressor, the switching valve, the indoor heat exchanger (condenser), the expansion valve, the outdoor heat exchanger (evaporator), the switching valve, and the compressor, in this order, and the outside heat absorbed by the outdoor heat exchanger is released into the room through the indoor heat exchanger.

JP-A-2010-096474 (PTL 1) discloses an operation condition determining means that in a heating operation determines whether an air conditioning system is satisfying pre-defrosting operation conditions. When the pre-defrosting operation conditions are satisfied, a pre-defrosting operation instructing means sends an instruction to boost the room heating operation so that the room temperature reaches a target set temperature higher than a standard set temperature.

JP-A-08-189686 (PTL 2) discloses performing a defrosting operation to circulate a refrigerant between an indoor unit and an outdoor unit in the opposite direction from the normal direction of a heating operation when an outdoor heat exchanger freezes during a heating operation or when the outdoor heat exchanger is frozen at the time of starting a heating operation. During the defrosting operation, a flap controller closes a flap provided for the blow opening of the indoor unit, and opens the flap when the operation changes to the normal heating operation. This related art also discloses starting the normal heating operation after unfreezing the outdoor heat exchanger.

JP-A-2015-042922 (PTL 3) discloses an air conditioner that includes a human body detecting means for detecting motion of a human body, and a lateral wind direction changing vane for changing the direction of blown air sideways. Before defrosting operation, the lateral wind direction changing vane is controlled so that warm air is blown into areas other than the area around a person as detected by the human body detecting means. This is intended to accumulate heat in areas where a person is absent so that a person can feel a smaller temperature change in a defrosting operation.

JP-A-2014-020730 (PTL 4) discloses providing an exhaust temperature sensor for detecting an exhaust temperature of a compressor, and an outdoor heat exchanger sensor for detecting a temperature of an outdoor heat exchanger. When starting defrosting, the defrosting control unit disclosed in this related art slowly opens an expansion valve. Upon the temperature difference between the exhaust temperature sensor and the outdoor heat exchanger sensor reaching a predetermined temperature difference, the defrosting control unit reduces the compressor rotation to a predetermined rotational speed, and opens a two-way valve. For defrosting, the expansion valve is closed to the predetermined degree of opening specified for defrosting, and the compressor rotation is increased to a predetermined rotational speed. To end the defrosting operation, the expansion valve opens, and the two-way valve is closed after reducing the compressor rotation to a predetermined rotational speed. The normal heating operation is resumed by bringing the degree of opening of the expansion valve, and the rotational speed of the compressor back to the settings specified for heating operation. This is intended to greatly reduce the switching noise of the two-way valve, and the refrigerant noise at the start of defrosting, and, because the heating operation does not stop even when defrosting is taking place, a user does not feel discomfort in a defrosting operation.

JP-A-2006-226568 (PTL 5) discloses reducing a pressure difference in an air conditioner operating under overload conditions of when defrosting is performed during a heating operation. This is achieved by bringing an expansion valve to fully open for a certain time period before switching a four-way valve. Because the four-way valve can be switched without stopping the compressor, the defrosting time can be reduced, and the optimum environment can be maintained at all times.

### Citation List

### Patent Literature

PTL 1: JP-A-2010-096474
PTL 2: JP-A-H08-189686
PTL 3: JP-A-2015-042922
PTL 4: JP-A-2014-020730
PTL 5: JP-A-2006-226568

### Summary of Invention

### Technical Problem

A technique is needed that reduces the annoying sound due to defrosting operation. It is accordingly an object of an aspect of the present invention to provide an air conditioner that can reduce the annoying sound due to defrosting operation, for example, the sound created when a refrigerant flows into the indoor heat exchanger in switching a defrosting operation to a heating operation.

### Solution to Problem

According to an aspect of the invention, there is provided an air conditioner that includes an indoor heat exchanger, an outdoor heat exchanger, an expansion valve, a compressor, and a control unit. The control unit increases the degree of opening of the expansion valve before switching a defrosting operation to a heating operation.

Preferably, the control unit switches a defrosting operation to a heating operation after a lapse of a predetermined time period from when the degree of opening of the expansion valve was increased.

Preferably, the control unit increases the degree of opening of the expansion valve either in multiple steps in a stepwise fashion, or in a non-stepwise fashion.

Preferably, the air conditioner further includes an outside fan for outdoor heat exchanger. The control unit drives the outside fan from rest, or increases the rotational speed of the outside fan, before switching a defrosting operation to a heating operation.

Preferably, the control unit reduces the rotational speed of the compressor before switching a defrosting operation to a heating operation.

Preferably, the control unit switches a defrosting operation to a heating operation when the pressure difference of a refrigerant between the outdoor heat exchanger side and the indoor heat exchanger side becomes a value equal to or less than a predetermined value.

Preferably, the control unit increases the degree of opening of the expansion valve before switching a heating operation to a defrosting operation.

### Advantageous Effects of Invention

As stated above, the aspect of the invention has enabled providing an air conditioner that can reduce the annoying sound due to defrosting operation, for example, the sound created when a refrigerant flows into the indoor heat exchanger in switching a defrosting operation to a heating operation.

### Brief Description of Drawings

FIG. 1 is a schematic block diagram of an air conditioner according to First Embodiment, showing the air conditioner with a four-way switching valve in cooling operation and defrosting operation mode.
FIG. 2 is a schematic block diagram of the air conditioner according to First Embodiment, showing the air conditioner with the four-way switching valve in heating operation mode.
FIG. 3 is a functional block diagram representing a functional configuration of the air conditioner according to First Embodiment.
FIG. 4 is a flowchart of the processes at the switching of a heating operation and a defrosting operation by a control unit 100 according to First Embodiment.
FIG. 5 is a flowchart of the processes at the switching of a heating operation and a defrosting operation by a control unit 100 according to Second Embodiment.
FIG. 6 is a first flowchart of the processes at the switching of a heating operation and a defrosting operation by a control unit 100 according to Third Embodiment.
FIG. 7 is a second flowchart of the processes at the switching of a heating operation and a defrosting operation by the control unit 100 according to Third Embodiment.
FIG. 8 is a flowchart of the processes at the switching of a heating operation and a defrosting operation by a control unit 100 according to Fourth Embodiment.
FIG. 9 is a flowchart of the processes at the switching of a heating operation and a defrosting operation by a control unit 100 according to Fifth Embodiment.
FIG. 10 is a schematic block diagram of an air conditioner according to Sixth Embodiment, showing the air conditioner with a four-way switching valve in cooling operation and defrosting operation mode.
FIG. 11 is a functional block diagram representing a functional configuration of the air conditioner according to Sixth Embodiment.
FIG. 12 is a first flowchart of the processes at the switching of a heating operation and a defrosting operation by a control unit 100 according to Sixth Embodiment.
FIG. 13 is a second flowchart of the processes at the switching of a heating operation and a defrosting operation by the control unit 100 according to Sixth Embodiment.

### Description of Embodiments

Embodiments of the present invention are described below with reference to the accompanying drawings. In the following descriptions, like elements are given like reference numerals. Such like elements will be referred to by the same names, and have the same functions. Accordingly, detailed descriptions of such elements will not be repeated.

### First Embodiment

### Overall Configuration of Air Conditioner

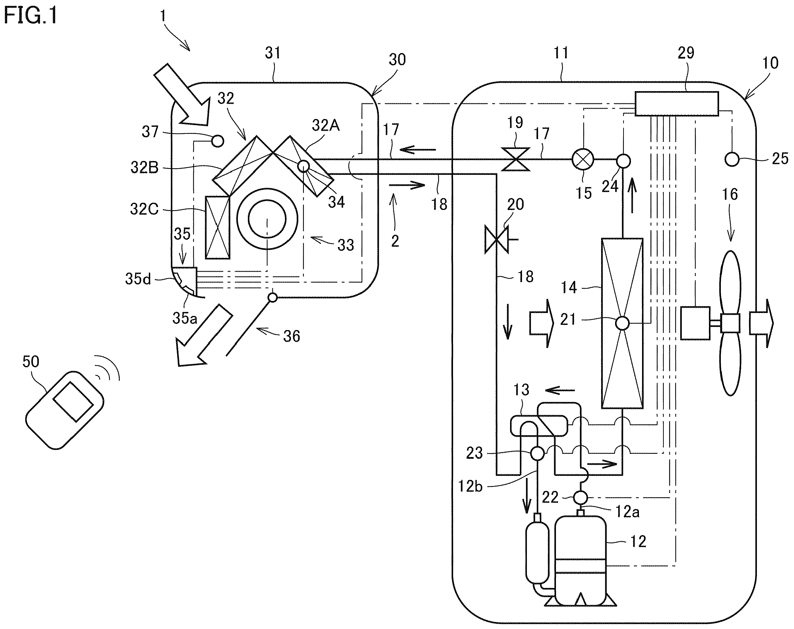

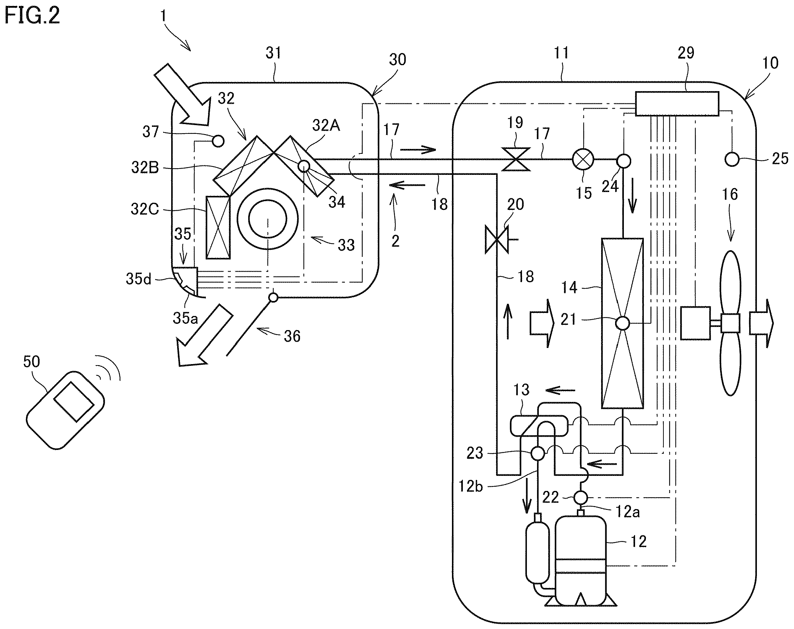

An overall configuration of an air conditioner 1 according to the present embodiment is described below, along with an overview of its basic operations. FIG. 1 is a schematic block diagram representing the air conditioner according to the present embodiment in a cooling operation and a defrosting operation. FIG. 2 is a schematic block diagram representing the air conditioner according to the present embodiment in a heating operation.

Referring to FIGS. 1 and 2, the air conditioner 1 according to the present embodiment is a separate-type air conditioner, and is configured mainly from an outdoor unit 10, an indoor unit 30, and a remote controller 50. The air conditioner 1 is configured by connecting the outdoor unit 10 and the indoor unit 30 via refrigerant pipes 17 and 18. The outdoor unit 10, the indoor unit 30, the remote controller 50, and the refrigerant pipes 17 and 18 are described below in detail.

### (1) Outdoor Unit

The outdoor unit 10 is configured mainly from a cabinet 11, a compressor 12, a four-way switching valve 13, an outdoor heat exchanger 14, an expansion valve 15, an outside fan 16, the refrigerant pipe 17, the refrigerant pipe 18, a two-way valve 19, a three-way valve 20, an outdoor heat exchanger temperature sensor 21, an exhaust temperature sensor 22, an intake temperature sensor 23, an exit temperature sensor 24, an outside temperature sensor 25, and an outdoor control unit 29. The outdoor unit 10 is installed outside.

The cabinet 11 houses the compressor 12, the four-way switching valve 13, the outdoor heat exchanger 14, the expansion valve 15, the outside fan 16, the refrigerant pipe 17, the refrigerant pipe 18, the two-way valve 19, the three-way valve 20, the temperature sensors 21 to 25, and the outdoor control unit 29, among others.

The compressor 12 has an exhaust pipe 12a and an intake pipe 12b. The exhaust pipe 12a and the intake pipe 12b are connected to different connection ports of the four-way switching valve 13. The compressor 12 is in communication with the outdoor control unit 29 by being connected thereto via a communication line, and operates according to control signals sent from the outdoor control unit 29. During its operation, the compressor 12 takes in a low-pressure refrigerant gas through the intake pipe 12b, and compresses the refrigerant gas to produce a high-pressure refrigerant gas. The high-pressure refrigerant gas discharges through the exhaust pipe 12a. The compressor 12, which is an inverter compressor in the present embodiment, may be a constant-speed compressor.

The four-way switching valve 13 is connected to the exhaust pipe 12a and the intake pipe 12b of the compressor 12, and to the outdoor heat exchanger 14 and the indoor heat exchanger 32 via refrigerant pipes. The four-way switching valve 13 is in communication with the outdoor control unit 29 by being connected thereto via a communication line, and operates according to control signals sent from the outdoor control unit 29. The four-way switching valve 13 operates to switch the cooling and defrosting operation mode (see FIG. 1) and the heating operation mode (see FIG. 2) according to control signals sent from the outdoor control unit 29. Here, the cooling and defrosting operation mode is a state in which the exhaust pipe 12a of the compressor 12 is connected to the outdoor heat exchanger 14, and the intake pipe 12b of the compressor 12 is connected to the indoor heat exchanger 32. The heating operation mode is a state in which the exhaust pipe 12a of the compressor 12 is connected to the indoor heat exchanger 32, and the intake pipe 12b of the compressor 12 is connected to the outdoor heat exchanger 14.

The outdoor heat exchanger 14 is of a structure in which large numbers of heat dissipating fins (not illustrated) are attached to a heat exchanger tube (not illustrated) that is horizontally folded back and forth multiple times (fin & tube type). The outdoor heat exchanger 14 functions as a condenser in a cooling operation and a defrosting operation (see FIG. 1), and as an evaporator in a heating operation (see FIG. 2). The heat exchanger may be a parallel-flow heat exchanger or a serpentine heat exchanger.

The expansion valve 15 is an electronic expansion valve that can vary its degree of opening by being controlled via a stepping motor (described later). The expansion valve 15 is connected at one end to the two-way valve 19 via the refrigerant pipe 17. The other end is connected to the outdoor heat exchanger 14. The stepping motor of the expansion valve 15 is in communication with the outdoor control unit 29 by being connected thereto via a communication line, and operates according to control signals sent from the outdoor control unit 29. In its operation, the expansion valve 15 serves to reduce pressure so that the high-temperature and high-pressure liquid refrigerant flowing out of the condenser (the outdoor heat exchanger 14 in a cooling operation and a defrosting operation, and the indoor heat exchanger 32 in a heating operation) can be brought to an easily evaporable state, and to adjust the amount of the refrigerant supplied to the evaporator (the indoor heat exchanger 32 in a cooling operation and a defrosting operation, and the outdoor heat exchanger 14 in a heating operation).

In the expansion valve 15 of the present embodiment, the smallest degree of opening (the refrigerant channel area is the smallest) is achieved when the degree of opening of the expansion valve 15 is 0 step, and the largest degree of opening (the refrigerant channel area is the largest) is achieved when the degree of opening of the expansion valve 15 is 500 steps. As used herein, "increasing the degree of opening of the expansion valve 15" means controlling the expansion valve 15 so as to open the expansion valve 15, that is, to increase the refrigerant channel area. As used herein, "reducing the degree of opening of the expansion valve 15 (or squeezing the expansion valve 15) " means controlling the expansion valve 15 so as to close the expansion valve 15, that is, to reduce the refrigerant channel area.

The outside fan 16 is configured mainly from a propeller fan and a motor. The propeller fan is driven to rotate by the motor, and supplies the outside air to the outdoor heat exchanger 14. The motor is in communication with the outdoor control unit 29 by being connected thereto via a communication line, and operates according to control signals sent from the outdoor control unit 29.

The two-way valve 19 is disposed on the refrigerant pipe 17. The two-way valve 19 is closed when removing the refrigerant pipe 17 from the outdoor unit 10, so that the refrigerant is prevented from leaking out of the outdoor unit 10.

The three-way valve 20 is disposed on the refrigerant pipe 18. The three-way valve 20 is closed when removing the refrigerant pipe 18 from the outdoor unit 10, so that the refrigerant is prevented from leaking out of the outdoor unit 10. When there is a need to collect the refrigerant from the outdoor unit 10, or from the whole refrigeration cycle including the indoor unit 30, the refrigerant is collected through the three-way valve 20.

The temperature sensors 21 to 25 are thermistors. The outdoor heat exchanger temperature sensor 21 is disposed on the outdoor heat exchanger 14. The exhaust temperature sensor 22 is disposed on the exhaust pipe 12a of the compressor 12. The intake temperature sensor 23 is disposed on the intake pipe 12b of the compressor 12. The exit temperature sensor 24 is disposed on the refrigerant pipe 17 in the vicinity of the exit of the outdoor heat exchanger 14. The outside temperature sensor 25, which is a sensor for measuring the outside temperature, is disposed at a predetermined location inside the cabinet 11. The temperature sensors 21 to 25 are all in communication with the outdoor control unit 29 by being connected thereto via communication lines, and send information of the measured temperatures to the outdoor control unit 29.

The outdoor control unit 29 is in communication with the compressor 12, the four-way switching valve 13, the expansion valve 15, the outside fan 16, and the temperature sensors 21 to 25 by being connected to these members via communication lines. For example, the processor of the outdoor control unit 29 yields appropriate control parameters through arithmetic processes of various types of information, including the output information of the temperature sensors 21 to 25, and various control parameters stored in memory, as needed, and sends the control parameters to the compressor 12, the four-way switching valve 13, the expansion valve 15, and the outside fan 16. The processor also sends and receives the control parameters and other information to and from an indoor control unit 35, as needed.

### (2) Indoor Unit

The indoor unit 30 is configured mainly from a cabinet 31, an indoor heat exchanger 32, an inside fan 33, a flap 36, an indoor heat exchanger temperature sensor 34, an inside temperature sensor 37, and the indoor control unit 35. The indoor unit 30 is installed typically on a wall of a room.

The cabinet 31 houses the indoor heat exchanger 32, the inside fan 33, the indoor heat exchanger temperature sensor 34, the inside temperature sensor 37, and the indoor control unit 35, among others. The flap 36 constitutes a part of the cabinet 31.

The indoor heat exchanger 32 combines three heat exchangers 32A, 32B, and 32C in the form of a roof over the inside fan 33. The heat exchangers 32A, 32B, and 32C each have a structure in which large numbers of heat dissipating fins (not illustrated) are attached to a heat exchanger tube (not illustrated) that is horizontally folded back and forth multiple times. The heat exchangers 32A, 32B, and 32C function as evaporators in a cooling operation and a defrosting operation (see FIG. 1), and as condensers in a heating operation (see FIG. 2).

The inside fan 33 is configured mainly from a crossflow fan and a motor. The crossflow fan is driven to rotate by the motor. The crossflow fan takes room air into the cabinet 31, and supplies it to the indoor heat exchanger 32. The crossflow fan sends air into a room after the heat exchange in the indoor heat exchanger 32. The motor is in communication with the indoor control unit 35 by being connected thereto via a communication line, and operates according to control signals sent from the indoor control unit 35.

The flap 36 is configured from a deflector and a motor. The flap is driven to rotate by the motor, and adjusts the direction of the air sent into the room by the crossflow fan. The motor is in communication with the indoor control unit 35 by being connected thereto via a communication line, and operates according to control signals sent from the indoor control unit 35.

The temperature sensors 34 and 37 are thermistors. The indoor heat exchanger temperature sensor 34 is disposed on the indoor heat exchanger 32. The inside temperature sensor 37, which measures the room temperature, is disposed in the vicinity of the intake inside the cabinet 31. The temperature sensors 34 and 37 are in communication with the indoor control unit 35 by being connected thereto via a communication line, and send information of the measured temperatures to the indoor control unit 35.

The indoor control unit 35 is in communication with the inside fan 33, the flap 36, and the temperature sensors 34 and 37 by being connected to these members via communication lines . The processor of the indoor control unit 35 yields appropriate control parameters through arithmetic processes of various types of information, including control signals from the remote controller 50, and the output information of the temperature sensors 34 and 37, as needed, and sends the control parameters and other information to the inside fan 33 and the flap 36. The processor also sends and receives the control parameters and other information to and from the outdoor control unit 29, as needed. An infrared receiver 35a receives flashing infrared rays generated by the remote controller 50. The infrared receiver 35a turns the flashing infrared rays into a signal, and sends the generated signal to the indoor control unit 35.

The indoor heat exchanger 32 of the indoor unit 30, and the compressor 12, the four-way switching valve 13, the outdoor heat exchanger 14, and the expansion valve 15 of the outdoor unit 10 are connected in series via the refrigerant pipes 17 and 18 to constitute a refrigerant circuit.

### (3) Remote Controller

The remote controller 50 is for transmitting various user instructions to the indoor control unit 35 of the indoor unit 30, using flashing infrared rays. The remote controller 50 is configured mainly from an infrared emitter, a display panel, an operation stop button, a mode switch button, a temperature up button, a temperature down button, an airflow up button, an airflow down button, a wind direction adjust button, and an automatic operation button, among others.

### (4) Refrigerant Pipes

The refrigerant pipe 17 is a pipe narrower than the refrigerant pipe 18, and through which a liquid refrigerant flows in a cooling operation and a defrosting operation. The refrigerant pipe 18 is a pipe thicker than the refrigerant pipe 17, and through which a gas refrigerant flows in a cooling operation. The refrigerant may be, for example, HFC R410A, or R32.

### Basic Operation of Air Conditioner

The following describes the cooling operation, the heating operation, and the defrosting operation of the air conditioner 1 according to the present embodiment.

### (1) Cooling Operation

In a cooling operation, the four-way switching valve 13 is in the state shown in FIG. 1. Specifically, the exhaust pipe 12a of the compressor 12 is connected to the outdoor heat exchanger 14, and the intake pipe 12b of the compressor 12 is connected to the indoor heat exchanger 32. Here, the two-way valve 19 and the three-way valve 20 are open. Starting the compressor 12 in this state draws the gas refrigerant into the compressor 12. After being compressed, the gas refrigerant is sent to the outdoor heat exchanger 14 via the four-way switching valve 13, and cooled into a liquid refrigerant in the outdoor heat exchanger 14. The liquid refrigerant is sent to the expansion valve 15, and decompressed into a gas-liquid two-phase state. The gas-liquid two-phase refrigerant is sent to the indoor heat exchanger 32 via the two-way valve 19, and evaporates into a gas refrigerant as it cools the room air. The gas refrigerant is sent back into the compressor 12 via the three-way valve 20 and the four-way switching valve 13.

### (2) Heating Operation

In a heating operation, the four-way switching valve 13 is in the state shown in FIG. 2. Specifically, the exhaust pipe 12a of the compressor 12 is connected to the indoor heat exchanger 32, and the intake pipe 12b of the compressor 12 is connected to the outdoor heat exchanger 14. Here, the two-way valve 19 and the three-way valve 20 are open. Starting the compressor 12 in this state draws the gas refrigerant into the compressor 12. After being compressed, the gas refrigerant is sent to the indoor heat exchanger 32 via the four-way switching valve 13 and the three-way valve 20, and condenses into a liquid refrigerant as it heats the room air. The liquid refrigerant is sent to the expansion valve 15 via the two-way valve 19, and decompressed into a gas-liquid two-phase state. The gas-liquid two-phase refrigerant is sent to the outdoor heat exchanger 14, and evaporates into a gas refrigerant in the outdoor heat exchanger 14. The gas refrigerant is sent back to the compressor 12 via the four-way switching valve 13.

### (3) Defrosting Operation

In a heating operation, frost formation may occur in the outdoor heat exchanger 14, and the outdoor heat exchanger 14 may fail to sufficiently perform as a heat exchanger. To avoid this, the outdoor control unit 29 determines whether frost formation has occurred in the outdoor heat exchanger 14 (whether defrosting is needed), using the temperature from the temperature sensor 21 for outdoor heat exchanger. When it is determined that frost formation has occurred (defrosting is needed), the outdoor control unit 29 switches the four-way switching valve 13, and effects the cooling operation for defrosting (reverse defrosting) . The outdoor control unit 29 determines whether the frost has been properly removed from the outdoor heat exchanger 14, using the temperature from the temperature sensor 21 for outdoor heat exchanger.

### Functional Configuration of Air Conditioner 1

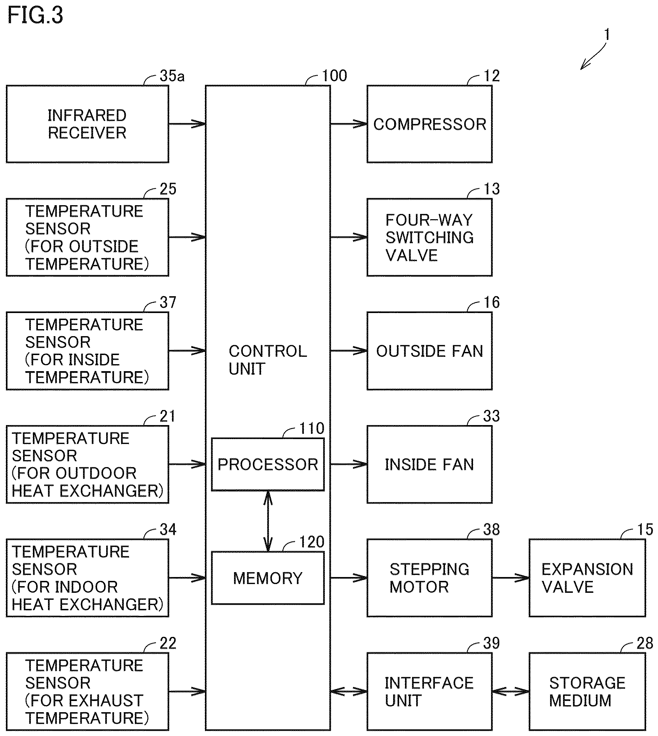

A functional configuration of the air conditioner 1 according to the present embodiment is described below, with reference to FIG. 3. FIG. 3 is a functional block diagram representing a functional configuration of the air conditioner 1 of First Embodiment.

As described above, the air conditioner 1 includes the outdoor control unit 29 and the indoor control unit 35. In the following, the outdoor control unit 29 and the indoor control unit 35 will collectively be referred to as control unit 100 for the purpose of explanation. The outdoor control unit 29 and the indoor control unit 35 are capable of communicating with each other via a wire. Basically, the processes executed by the control unit 100 may be executed by the outdoor control unit 29 or the outdoor control unit 29, or by both of these units in a shared fashion.

Instead of providing the indoor control unit 35 in the air conditioner 1, almost all functions of the control unit 100 may be served by the outdoor control unit 29. Alternatively, instead of providing the outdoor control unit 29 in the air conditioner 1, almost all functions of the control unit 100 may be served by the indoor control unit 35.

The control unit 100 includes, for example, a processor 110 for performing various arithmetic processes, and a memory 120 for storing various programs and data. The processor 110 is configured from, for example, a CPU (Central Processing Unit). The processor 110 executes various processes according to the programs stored in the memory 120. Specifically, in the present embodiment, the processor 110 controls a stepping motor 38 according to programs to control the degree of opening of the expansion valve 15. The memory 120 is realized by, for example, various types of RAMs (Random Access Memory), and various types of ROMs (Read-Only Memory).

In the present embodiment, the degree of opening of the expansion valve 15 is calculated as the number of excitation steps of the phase of the stepping motor 38. The expansion valve 15, however, is not limited to such type.

The following describes control of the degree of opening of the expansion valve 15 executed by the control unit 100, specifically, the processor 110. As a rule, for an efficient heat exchange in the cycle, the control unit 100 controls the degree of opening of the expansion valve 15 so as to maintain the degree of superheating of the evaporator at a predetermined value. As used herein, the phrase "degree of superheating" refers to the temperature difference between a superheated vapor temperature and a dry saturated vapor temperature under a given pressure.

In a heating operation as shown in FIG. 2, the processor 110 starts a defrosting operation as shown in FIG. 1 upon determining that frost formation has occurred (defrosting is needed) in the outdoor heat exchanger 14. Specifically, by using information such as the temperature from the temperature sensor 21 for outdoor heat exchanger 14, the processor 110 determines that frost formation has occurred (defrosting is needed) in the outdoor heat exchanger 14, and switches the four-way switching valve 13 to a cooling operation state when predetermined conditions are satisfied. The processor 110 then decides the degree of opening for the expansion valve 15 such that the desired degree of superheating can be achieved when the defrosting operation is brought back to the heating operation.

### Switching of Heating Operation and Defrosting Operation by Control Unit 100

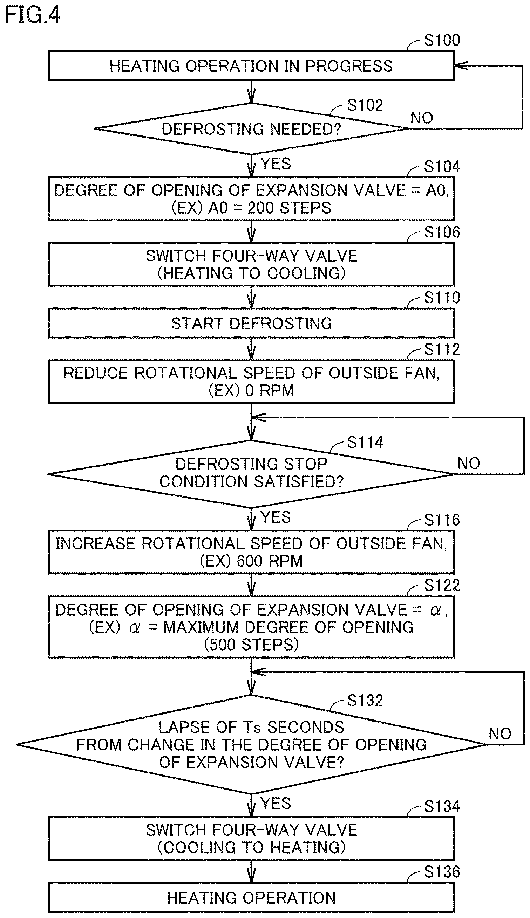

The following describes the processes by which the control unit 100 according to the present embodiment switches a heating operation and a defrosting operation, with reference to FIG. 4. FIG. 4 is a flowchart representing the switching of a heating operation and a defrosting operation by the control unit 100 according to the present embodiment.

In a heating operation as shown in FIG. 2 (step S100), the control unit 100 determines whether frost formation has occurred (defrosting is needed) in the outdoor heat exchanger 14, using the temperature from the temperature sensor 21 for outdoor heat exchanger 14 (step S102). The control unit 100 repeats the process of step S100 when it is not determined that frost formation has occurred (defrosting is needed) in the outdoor heat exchanger 14 (NO in step S102).

When it is determined that frost formation has occurred (defrosting is needed) in the outdoor heat exchanger 14 (YES in step S102), the control unit 100 stores the current degree of opening AO of the expansion valve 15 (step S104). The control unit 100 then switches the four-way switching valve 13 (step S106) to start a cooling and defrosting operation as shown in FIG. 1 (step S110).

In a defrosting operation, the control unit 100 reduces the rotational speed of the outside fan 16 (step S112). As an example, the outside fan stops at 0 rpm in S112 of FIG. 4. In a defrosting operation, the control unit 100 controls the stepping motor 38 to reduce the degree of opening of the expansion valve 15, or, in other words, squeeze the expansion valve 15.

The control unit 100 determines whether defrosting of the outdoor heat exchanger 14 is finished (step S114), using the temperature from the temperature sensor 21 for outdoor heat exchanger 14. When it is not determined that defrosting of the outdoor heat exchanger 14 is finished (NO in step S114), the control unit 100 repeats the process of step S114 while reducing the degree of opening of the expansion valve 15 by controlling the stepping motor 38.

The control unit 100 increases the rotational speed of the outside fan 16 when it determines that defrosting of the outdoor heat exchanger 14 is finished (YES in step S114) (step S116) . As an example, the rotational speed of the outside fan is 600 rpm in S116 of FIG. 4. This can cause a pressure drop in the refrigerant on the outdoor heat exchanger 14 side.

When the air conditioner is of a type that stops the rotation of the outside fan 16 in defrosting as in the present embodiment, the control unit 100 starts rotation of the outside fan 16 when it determines that defrosting of the outdoor heat exchanger 14 is finished (YES in step S114) (step S116).

In the case where the air conditioner is of a type in which the rotational speed of the outside fan 16 is reduced in defrosting instead stopping the rotation, the control unit 100 increases the rotational speed of the outside fan 16 from the current speed (for example, the outside fan 16 is brought back to the rotational speed before defrosting) (step S116) when it determines that defrosting of the outdoor heat exchanger 14 is finished (YES in step S114).

After a lapse of a predetermined time period (for example, 5 seconds) from when the rotational speed of the outside fan 16 was increased, the control unit 100 varies the degree of opening of the expansion valve 15 to α by controlling the stepping motor 38 (step S122) . For example, the control unit 100 increases the degree of opening of the expansion valve 15 to 500 steps.

More specifically, the control unit 100 may increase the degree of opening of the expansion valve 15 after a predetermined time period from when the outside fan 16 was instructed to increase its rotational speed, or after a predetermined time period from when it was confirmed, by means of feedback control, that the outside fan 16 has increased the rotational speed.

The control unit 100 according to the present embodiment is programmed so that the degree of opening α of the expansion valve 15 in step S122 is larger than the degree of opening AO of the expansion valve 15 in step S104. Specifically, the control unit 100 in step S122 sets at least 300 steps for the degree of opening of the expansion valve 15 when, for example, the degree of opening AO of the expansion valve 15 immediately before the end of the previous heating operation is 300 steps, the degree of opening of the expansion valve 15 at the end of defrosting is 150 steps, and the degree of opening of the expansion valve 15 at the start of a heating operation in step S136 is 200 steps.

The control unit 100 determines whether a predetermined time Ts (for example, 5 seconds) has elapsed from when the degree of opening of the expansion valve 15 was increased in step S122 (step S132). When it is determined that a predetermined time Ts has elapsed from when the degree of opening of the expansion valve 15 was increased in step S122 (YES in step S132), the control unit 100 switches the four-way switching valve 13 (step S134) to start the heating operation (step S136). The control unit 100 sets, for example, AO = 200 for the degree of opening of the expansion valve 15 at the start of a heating operation.

More specifically, the control unit 100 may switch the operation to the heating operation after a predetermined time from when the stepping motor 38 was instructed to increase the degree of opening of the expansion valve 15, or after a predetermined time from when it was confirmed, by means of feedback control, that the degree of opening of the expansion valve 15 has increased.

As described above, in the present embodiment, the degree of opening of the expansion valve 15 is increased immediately before switching a defrosting operation to a heating operation. This allows the refrigerant to more easily flows to the indoor heat exchanger 32 side before switching takes place, and the refrigerant can have a smaller pressure difference between the indoor heat exchanger 32 side and the outdoor heat exchanger 14 side. Accordingly, a rapid inflow of refrigerant to the indoor heat exchanger 32 side can be reduced at the switching of the defrosting operation to the heating operation, and the sound produced by the inflow of the refrigerant to the indoor heat exchanger 32 side becomes smaller.

### Second Embodiment

In First Embodiment, the degree of opening of the expansion valve 15 is increased only once in step S122 of FIG. 4. The invention, however, is not limited to this embodiment. In the present embodiment, the degree of opening of the expansion valve 15 is increased in a stepwise fashion immediately before switching a defrosting operation to a heating operation.

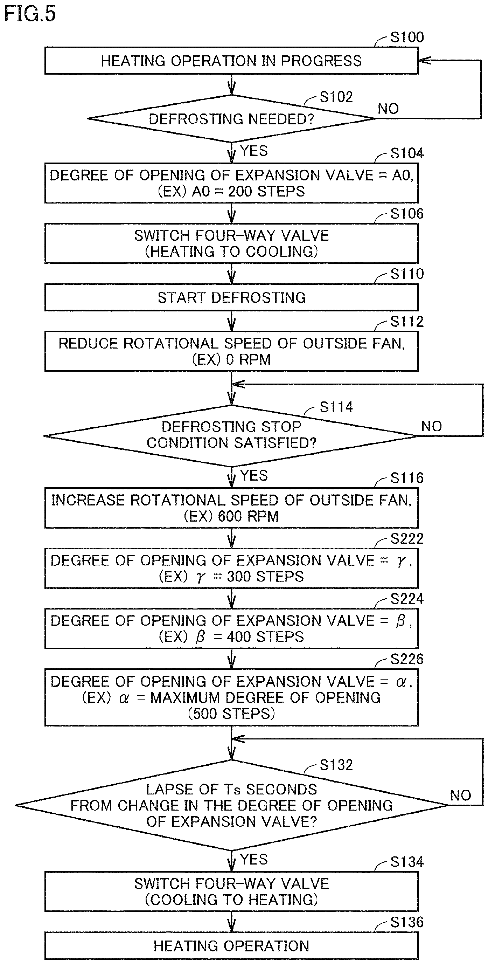

The present embodiment does not differ from First Embodiment with respect to the overall configuration of the air conditioner 1 according to the present embodiment, the basic operations of the air conditioner 1, including the cooling operation, the heating operation, and the defrosting operation, and the functional configuration of the air conditioner 1. Accordingly, these will not be described again. The following describes the processes performed by the control unit 100 of the present embodiment at the switching of the heating operation and the defrosting operation, by focusing on differences from First Embodiment, with reference to FIG. 5. FIG. 5 is a flowchart representing the processes performed by the control unit 100 of the present embodiment at the switching of the heating operation and the defrosting operation.

The control unit 100 increases the rotational speed of the outside fan 16 when it determines that defrosting of the outdoor heat exchanger 14 is finished (YES in step S114) (step S116). This can cause a pressure drop in the refrigerant on the outdoor heat exchanger 14 side.

After a lapse of a predetermined time period (for example, 3 seconds) from when the rotational speed of the outside fan 16 was increased, the control unit 100 varies the degree of opening of the expansion valve 15 to γ by controlling the stepping motor 38 (step S222). For example, the control unit 100 increases the degree of opening of the expansion valve 15 to 300 steps. Alternatively, the control unit 100 increases the degree of opening of the expansion valve 15 by an amount of 100 steps.

After a lapse of a predetermined time period (for example, 3 seconds), the control unit 100 varies the degree of opening of the expansion valve 15 to β by controlling the stepping motor 38 (step S224). For example, the control unit 100 increases the degree of opening of the expansion valve 15 to 400 steps. Alternatively, the control unit 100 increases the degree of opening of the expansion valve 15 by an amount of additional 100 steps.

After a lapse of a predetermined time period (for example, 3 seconds), the control unit 100 varies the degree of opening of the expansion valve 15 to α by controlling the stepping motor 38 (step S226). For example, the control unit 100 increases the degree of opening of the expansion valve 15 to the maximum value. Alternatively, the control unit 100 increases the degree of opening of the expansion valve 15 by an amount of additional 100 steps.

The control unit 100 according to the present embodiment is programmed so that the degree of opening α of the expansion valve 15 in step S226 is larger than the degree of opening AO of the expansion valve 15 in step S104.

The control unit 100 determines whether a predetermined time Ts (for example, 7 seconds) has elapsed from when the degree of opening of the expansion valve 15 was increased in step S222 (step S132). When it is determined that a predetermined time Ts has elapsed from when the degree of opening of the expansion valve 15 was increased in step S222 (YES in step S132), the control unit 100 switches the four-way switching valve 13 (step S134) to start the heating operation (step S136).

In the present embodiment, the degree of opening of the expansion valve 15 is increased in three steps. However, the degree of opening of the expansion valve 15 may be increased in two steps, or in four or more steps. Alternatively, the control unit 100 may be adapted so that it increases the degree of opening of the expansion valve 15 in predetermined steps (for example, in units of 100 steps) every predetermined time period (for example, every 3 seconds), until the predetermined degree of opening α (for example, 500 steps) is reached.

As described above, in the present embodiment, the degree of opening of the expansion valve 15 is increased in a stepwise fashion immediately before switching a defrosting operation to a heating operation. This allows the refrigerant to more gradually flows to the indoor heat exchanger 32 side before switching takes place, and the pressure difference of the refrigerant between the indoor heat exchanger 32 side and the outdoor heat exchanger 14 side becomes gradually smaller. Accordingly, a rapid inflow of refrigerant to the indoor heat exchanger 32 side can be reduced at the switching of the defrosting operation to the heating operation, and the sound produced by the inflow of the refrigerant to the indoor heat exchanger 32 side becomes smaller.

### Third Embodiment

In Second Embodiment, the degree of opening of the expansion valve 15 is increased in a stepwise fashion in steps S222, S224, and S226 of FIG. 5. However, the invention is not limited to this embodiment. In the present embodiment, the degree of opening of the expansion valve 15 is increased in a non-stepwise fashion immediately before switching a defrosting operation to a heating operation.

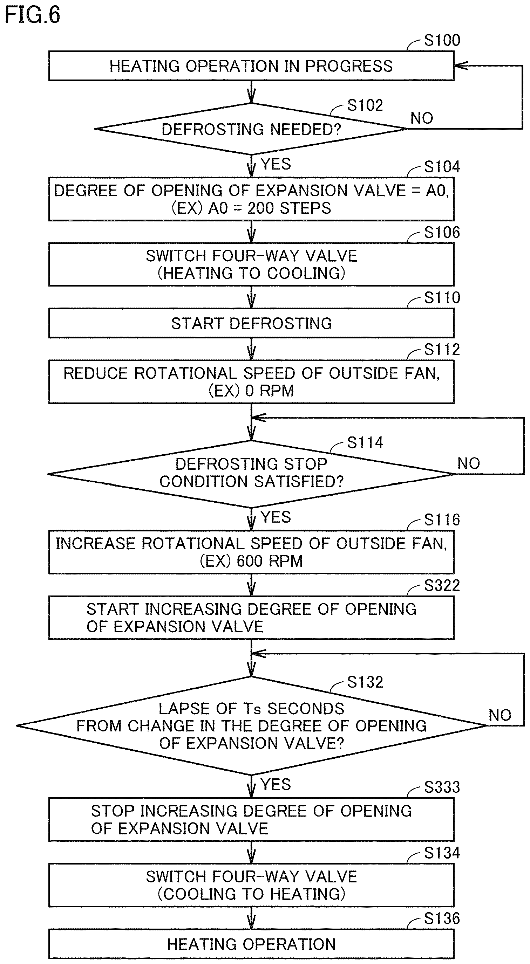

The present embodiment does not differ from First Embodiment with respect to the overall configuration of the air conditioner 1 according to the present embodiment, the basic operations of the air conditioner 1, including the cooling operation, the heating operation, and the defrosting operation, and the functional configuration of the air conditioner 1. Accordingly, these will not be described again. The following describes the processes performed by the control unit 100 of the present embodiment at the switching of the heating operation and the defrosting operation, by focusing on differences from First Embodiment, with reference to FIG. 6. FIG. 6 is a flowchart representing the processes performed by the control unit 100 of the present embodiment at the switching of the heating operation and the defrosting operation.

The control unit 100 increases the rotational speed of the outside fan 16 when it determines that defrosting of the outdoor heat exchanger 14 is finished (YES in step S114) (step S116). This can cause a pressure drop in the refrigerant on the outdoor heat exchanger 14 side.

After a lapse of a predetermined time period (for example, 5 seconds) from when the rotational speed of the outside fan 16 was increased, the control unit 100 starts increasing the degree of opening of the expansion valve 15 by controlling the stepping motor 38 (step S322) . For example, the control unit 100 increases the degree of opening of the expansion valve 15 at a rate of 30 steps/s by controlling the stepping motor 38.

The control unit 100 determines whether a predetermined time Ts (for example, 10 seconds) has elapsed from when the degree of opening of the expansion valve 15 started to increase in step S322 (step S132). When it is determined that a predetermined time Ts has elapsed from when the degree of opening of the expansion valve 15 started to increase in step S322 (YES in step S132), the control unit 100 stops increasing the degree of opening of the expansion valve 15 by controlling the stepping motor 38, and fixes the degree of opening (step S333) . The control unit 100 then starts the heating operation (step S136) by switching the four-way switching valve 13 (step S134).

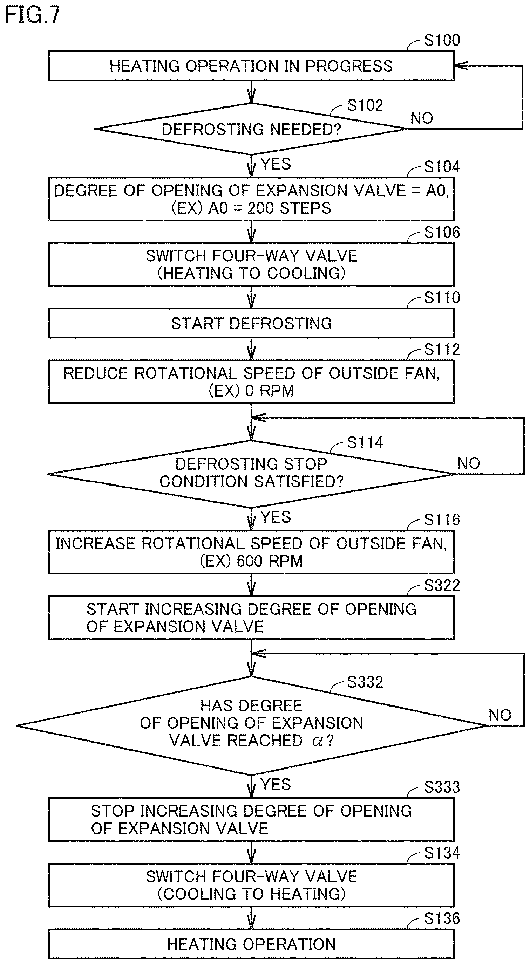

In the present embodiment, the degree of opening keeps increasing until the predetermined time is elapsed from when the degree of opening of the expansion valve 15 started to increase. However, as shown in FIG. 7, the control unit 100 may determine whether the degree of opening of the expansion valve 15 has reached a predetermined degree of opening (step S332). When it is determined that the degree of opening of the expansion valve 15 has reached a predetermined degree of opening (YES in step S332), the control unit 100 may stop increasing the degree of opening of the expansion valve 15 by controlling the stepping motor 38, and fix the degree of opening (step S333). The control unit may then start the heating operation (step S136) by switching the four-way switching valve 13 (step S134).

As described above, in the present embodiment, the degree of opening of the expansion valve 15 is increased in a non-stepwise fashion immediately before switching a defrosting operation to a heating operation. This allows the refrigerant to more gradually flows to the indoor heat exchanger 32 side before switching takes place, and the pressure difference of the refrigerant between the indoor heat exchanger 32 side and the outdoor heat exchanger 14 side becomes gradually smaller. Accordingly, a rapid inflow of refrigerant to the indoor heat exchanger 32 side can be reduced at the switching of the defrosting operation to the heating operation, and, because the refrigerant flow is gradual, the sound produced by the inflow of the refrigerant to the indoor heat exchanger 32 side becomes smaller.

### Fourth Embodiment

In the present embodiment, the rotational speed of the compressor 12 is reduced, in addition to the configurations of First to Third Embodiments, or instead of the configurations of First to Third Embodiments.

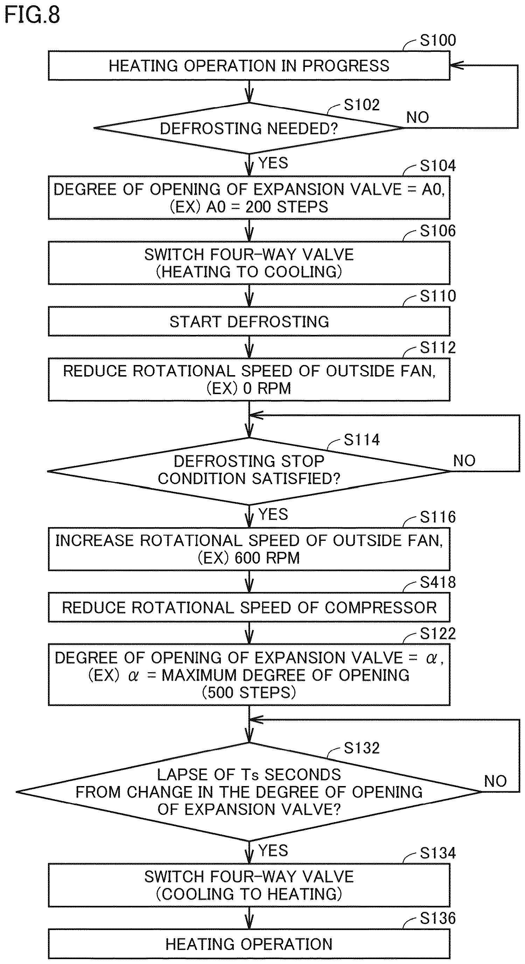

The present embodiment does not differ from First Embodiment with respect to the overall configuration of the air conditioner 1 according to the present embodiment, the basic operations of the air conditioner 1, including the cooling operation, the heating operation, and the defrosting operation, and the functional configuration of the air conditioner 1. Accordingly, these will not be described again. The following describes the processes performed by the control unit 100 of the present embodiment at the switching of the heating operation and the defrosting operation, by focusing on differences from First Embodiment, with reference to FIG. 8. FIG. 8 is a flowchart representing the processes performed by the control unit 100 of the present embodiment at the switching of the heating operation and the defrosting operation.

The control unit 100 increases the rotational speed of the outside fan 16 when it determines that defrosting of the outdoor heat exchanger 14 is finished (YES in step S114) (step S116). This can cause a pressure drop in the refrigerant on the outdoor heat exchanger 14 side.

In the present embodiment, the control unit 100 reduces the rotational speed of the compressor 12 (step S418). After a lapse of a predetermined time period (for example, 5 seconds) from when the rotational speed of the outside fan 16 was increased, the control unit 100 increases the degree of opening of the expansion valve 15 by controlling the stepping motor 38 (step S122).

As described above, in the present embodiment, the rotational speed of the compressor 12 is reduced immediately before switching a defrosting operation to a heating operation, in addition to increasing the degree of opening of the expansion valve 15. This allows the refrigerant to more easily flow to the indoor heat exchanger 32 side before switching takes place, and the pressure difference of the refrigerant between the indoor heat exchanger 32 side and the outdoor heat exchanger 14 side becomes smaller. The amount of circulating refrigerant also can be reduced by reducing the rotational speed of the compressor 12. Accordingly, a rapid inflow of refrigerant to the indoor heat exchanger 32 side can be reduced at the switching of the defrosting operation to the heating operation, and the sound produced by the inflow of the refrigerant to the indoor heat exchanger 32 side becomes smaller.

### Fifth Embodiment

In the present embodiment, the degree of opening of the expansion valve 15 is increased immediately before switching a heating operation to a defrosting operation, in addition to the configurations of First to Fourth Embodiments, or instead of the configurations of First to Fourth Embodiments.

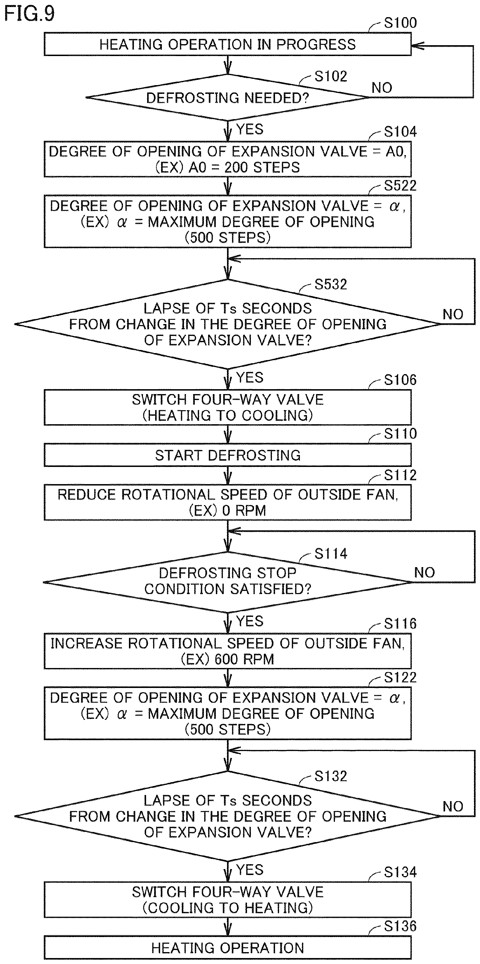

The present embodiment does not differ from First Embodiment with respect to the overall configuration of the air conditioner 1 according to the present embodiment, the basic operations of the air conditioner 1, including the cooling operation, the heating operation, and the defrosting operation, and the functional configuration of the air conditioner 1. Accordingly, these will not be described again. The following describes the processes performed by the control unit 100 of the present embodiment at the switching of the heating operation and the defrosting operation, by focusing on differences from First Embodiment, with reference to FIG. 9. FIG. 9 is a flowchart representing the processes performed by the control unit 100 of the present embodiment at the switching of the heating operation and the defrosting operation.

First, in a heating operation (step S100), the control unit 100 determines whether frost formation has occurred defrosting is needed) in the outdoor heat exchanger 14 (step S102), using the temperature from the temperature sensor 21 for outdoor heat exchanger 14. The control unit 100 repeats the process of step S100 when it is not determined that frost formation has occurred (defrosting is needed) in the outdoor heat exchanger 14 (NO in step S102).

When it is determined that frost formation has occurred (defrosting is needed) in the outdoor heat exchanger 14 (YES in step S102), the control unit 100 stores the current degree of opening AO of the expansion valve 15 (step S104).

In the present embodiment, the control unit 100 varies the degree of opening of the expansion valve 15 to α by controlling the stepping motor 38 (step S522). The control unit 100 according to the present embodiment is programmed so that the degree of opening α of the expansion valve 15 in step S522 is larger than the degree of opening A0 of the expansion valve 15 in step S104.

The control unit 100 determines whether a predetermined time Ts (for example, 5 seconds) has elapsed from when the degree of opening of the expansion valve 15 was increased in step S522 (step S532). When it is determined that a predetermined time Ts has elapsed from when the degree of opening of the expansion valve 15 was increased in step S522 (YES in step S532), the control unit 100 starts the cooling and defrosting operation (step S110) by switching the four-way switching valve 13 (step S106).

In the present embodiment, it is possible to increase the rotational speed of the outside fan 16, reduce the rotational speed of the compressor 12, and increase the degree of opening of the expansion valve 15 either in multiple steps or in a non-stepwise fashion in, for example, step S522 and step S532 when switching the heating operation to the defrosting operation, as in the processes at the switching of the defrosting operation to the heating operation in First to Fourth Embodiments.

The processes of step S112 and the subsequent steps of the present embodiment are the same as the processes of step S112 and the subsequent steps of First Embodiment, and will not be described again. The rotational speed of the compressor 12 may be reduced, and the degree of opening of the expansion valve 15 may be increased either in multiple steps or in a non-stepwise fashion in, for example, step S122 and step S132 of the present embodiment, as in Second to Fourth Embodiments.

As described above, in the present embodiment, the degree of opening of the expansion valve 15 is increased not only immediately before switching a defrosting operation to a heating operation, but immediately before switching a heating operation to a defrosting operation. This allows the refrigerant to more easily flows to the indoor heat exchanger 32 side before switching takes place, and the pressure difference of the refrigerant between the indoor heat exchanger 32 side and the outdoor heat exchanger 14 side becomes smaller. Accordingly, a rapid inflow of refrigerant to the indoor heat exchanger 32 side can be reduced at the switching of the defrosting operation to the heating operation, and the sound produced by the inflow of the refrigerant to the indoor heat exchanger 32 side becomes smaller.

### Sixth Embodiment

In First to Fifth Embodiments, the cooling and defrosting operation is switched to the heating operation after a lapse of the predetermined time period from when the degree of opening of the expansion valve 15 started to increase. However, the invention is not limited to this embodiment. In the present embodiment, the cooling and defrosting operation is switched to the heating operation when the pressure difference of the refrigerant between the indoor heat exchanger 32 side and the outdoor heat exchanger 14 side becomes small.

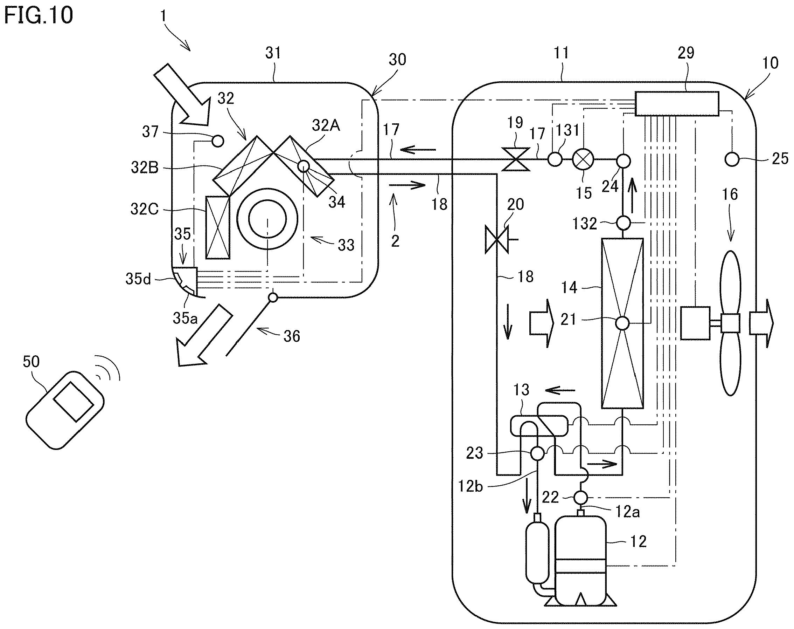

The following describes the overall configuration of the air conditioner 1 according to the present embodiment, by focusing on differences from First to Fifth Embodiments, with reference to FIG. 10. FIG. 10 is a schematic block diagram representing the air conditioner of the present embodiment in a cooling operation and a defrosting operation.

In the air conditioner 1 according to the present embodiment, a pressure sensor 131 is installed on the indoor heat exchanger 32 side of the refrigerant pipe 17. In FIG. 10, the pressure sensor 131 for indoor heat exchanger is installed on the refrigerant pipe 17 between the two-way valve 19 and the expansion valve 15. In FIG. 10, the pressure sensor 131 for indoor heat exchanger is installed on the outdoor unit side, in a part of the refrigerant pipe 17 where the pressure is about the same as the pressure in the indoor heat exchanger 32. However, the pressure sensor 131 may be installed in a portion closer to the indoor heat exchanger 32.

A pressure sensor 132 is installed on the outdoor heat exchanger 14 side of the refrigerant pipe 17. In FIG. 10, the pressure sensor 132 for outdoor heat exchanger is installed between the expansion valve 15 and the outdoor heat exchanger 14.

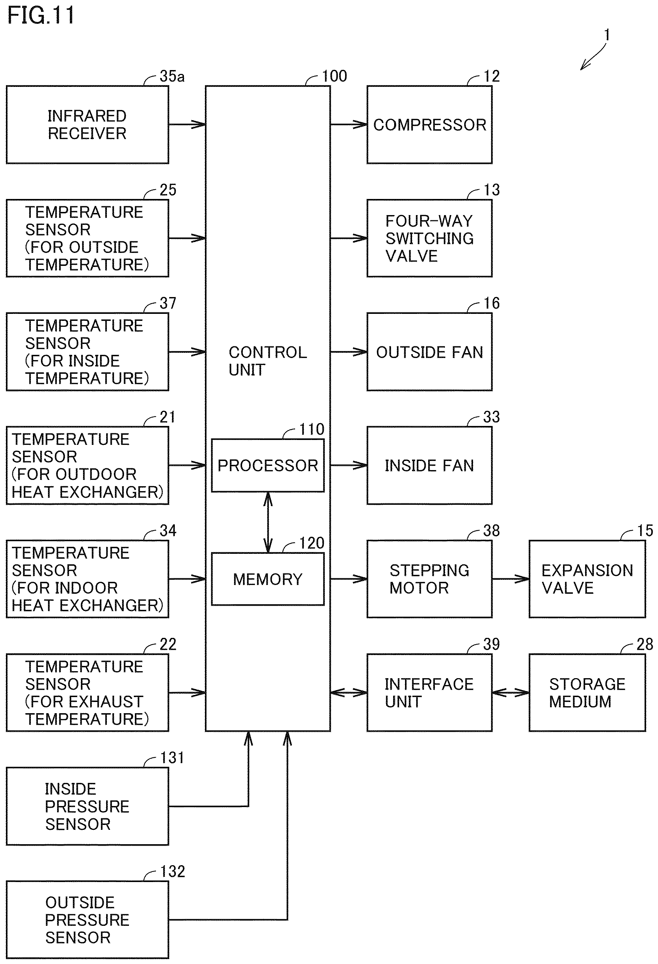

A functional configuration of the air conditioner 1 according to the present embodiment is described below, by focusing of differences from First to Fifth Embodiments, with reference to FIG. 11. FIG. 11 is a functional block diagram representing a functional configuration of the air conditioner 1 according to the present embodiment. In the present embodiment, the control unit 100 obtains the pressure of the refrigerant on the indoor heat exchanger 32 side from the inside pressure sensor 131, and the pressure of the refrigerant on the outdoor heat exchanger 14 side from the outside pressure sensor 132.

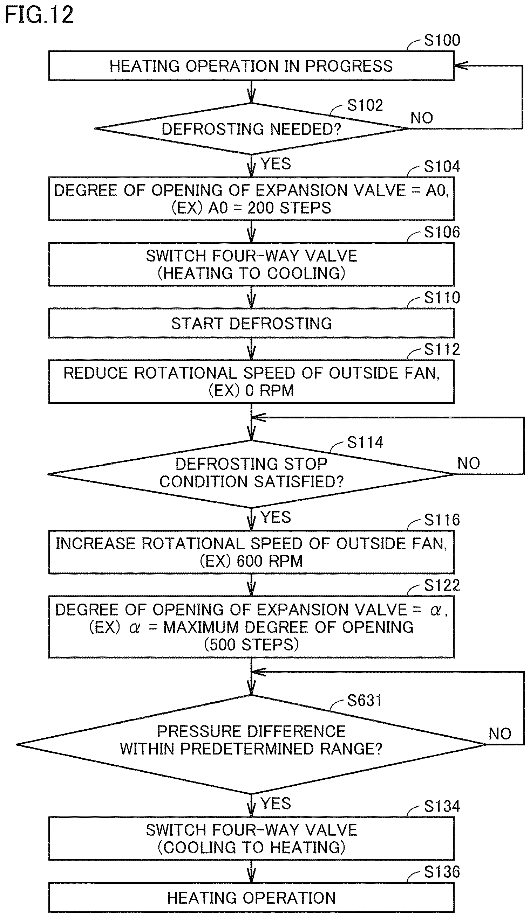

The following describes the processes of the control unit 100 of the present embodiment at the switching of the heating operation and the defrosting operation, by focusing on differences from First to Fifth Embodiments, with reference to FIG. 12. FIG. 12 is a flowchart representing the processes of the control unit 100 of the present embodiment at the switching of the heating operation and the defrosting operation

The control unit 100 increases the rotational speed of the outside fan 16 when it determines that defrosting of the outdoor heat exchanger 14 is finished (YES in step S114) (step S116). After a lapse of a predetermined time (for example, 5 seconds) from when the rotational speed of the outside fan 16 was increased, the control unit 100 varies the degree of opening of the expansion valve 15 to α by controlling the stepping motor 38 (step S122) . For example, the control unit 100 increases the degree of opening of the expansion valve 15 to 500 steps.

The control unit 100 according to the present embodiment is programmed so that the degree of opening α of the expansion valve 15 in step S122 is larger than the degree of opening AO of the expansion valve 15 in step S104.

The control unit 100 calculates the difference between the refrigerant pressure obtained by the inside pressure sensor 131 on the indoor heat exchanger 32 side, and the refrigerant pressure obtained by the outside pressure sensor 132 on the outdoor heat exchanger 14 side. The control unit determines whether the pressure difference is equal to or less than a predetermined value (step S631).

The control unit 100 repeats the process of step S631 when it determines that the pressure difference is not equal to or less than the predetermined value (NO in step S631).

When it is determined that the pressure difference is equal to or less than the predetermined value (YES in step S631), the control unit 100 starts the heating operation (step S136) by switching the four-way switching valve 13 (step S134).

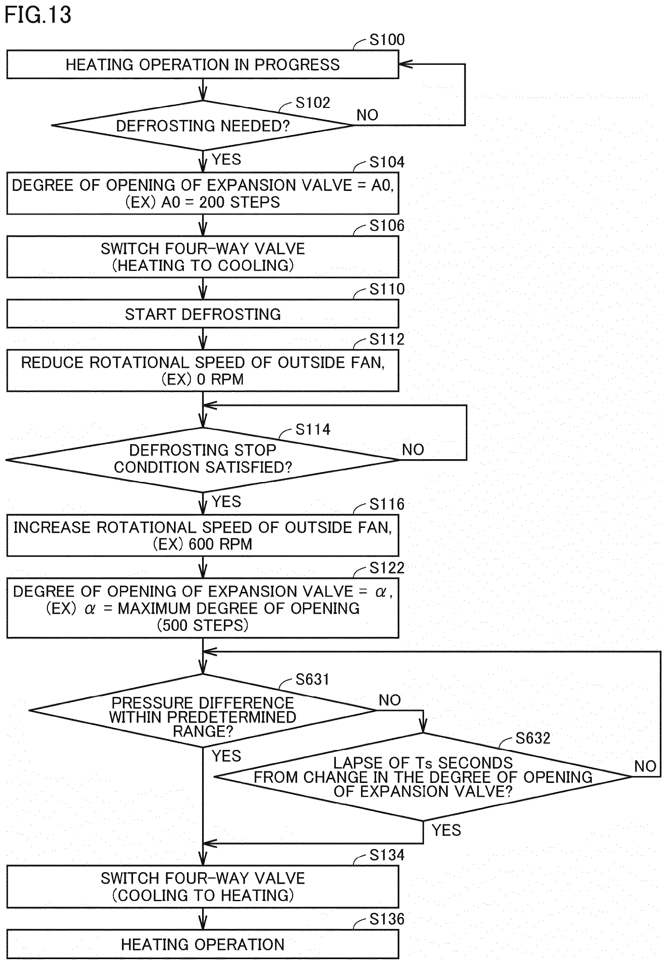

When it is determined that the pressure difference is not equal to or less than the predetermined value (NO in step S631), the control unit 100 may determine whether a predetermined time Ts (for example, 5 seconds) has elapsed from when the degree of opening of the expansion valve 15 was increased in step S122 (step S632), as shown in FIG. 13. The control unit 100 may repeat the process of step S631 and the subsequent steps when it determines that the predetermined time Ts has not elapsed from when the degree of opening of the expansion valve 15 was increased in step S122 (NO in step S632) .

When the pressure difference is equal to or less than the predetermined value (YES in step S631), or the predetermined time Ts has elapsed from when the degree of opening of the expansion valve 15 was increased in step S122 (YES in step S632), the control unit 100 may start the heating operation (step S136) by switching the four-way switching valve 13 (step S134).

As described above, in the present embodiment, the degree of opening of the expansion valve 15 is increased immediately before switching a defrosting operation to a heating operation so that the refrigerant can more easily flow to the indoor heat exchanger 32 side, and the pressure difference of the refrigerant between the indoor heat exchanger 32 side and the outdoor heat exchanger 14 side becomes smaller. Because the defrosting operation is switched to the heating operation after the pressure difference has reached a value equal to or less than the predetermined value, the a rapid inflow of refrigerant to the indoor heat exchanger 32 side can be reduced at the time of switching, and the sound produced by the inflow of the refrigerant to the indoor heat exchanger 32 side becomes smaller.

### Embodiment Summary

First to Sixth Embodiments provide the air conditioner 1 that includes the indoor heat exchanger 32, the outdoor heat exchanger 14, the expansion valve 15, the compressor 12, and the control unit 100. The control unit 100 increases the degree of opening of the expansion valve 15 before switching a defrosting operation to a heating operation.

Preferably, the control unit 100 switches a defrosting operation to a heating operation after a lapse of a predetermined time period from when the degree of opening of the expansion valve 15 was increased.

Preferably, the control unit 100 increases the degree of opening of the expansion valve 15 either in multiple steps in a stepwise fashion, or in a non-stepwise fashion.

Preferably, the air conditioner 1 further includes the outside fan 16 for outdoor heat exchanger 14. The control unit 100 drives the outside fan 16 from rest, or increases the rotational speed of the outside fan 16, before switching a defrosting operation to a heating operation.

Preferably, the control unit 100 reduces the rotational speed of the compressor 12 before switching a defrosting operation to a heating operation.

Preferably, the control unit 100 switches a defrosting operation to a heating operation when the pressure difference of a refrigerant between the outdoor heat exchanger 14 side and the indoor heat exchanger 32 side becomes a value equal to or less than a predetermined value.

Preferably, the control unit 100 increases the degree of opening of the expansion valve 15 before switching a heating operation to a defrosting operation.

The embodiments disclosed herein are to be considered in all aspects only as illustrative and not restrictive. The scope of the present invention is to be determined by the scope of the appended claims, not by the foregoing descriptions, and the invention is intended to cover all modifications falling within the equivalent meaning and scope of the claims set forth below.

### [Reference Signs List]

- 1:: Air conditioner
- 10:: Outdoor unit
- 11:: Cabinet
- 12:: Compressor
- 12a:: Exhaust pipe
- 12b:: Intake pipe
- 13:: Four-way switching valve
- 14:: Outdoor heat exchanger
- 15:: Expansion valve
- 16:: Outside fan
- 17:: Refrigerant pipe
- 18:: Refrigerant pipe
- 19:: Two-way valve
- 20:: Three-way valve
- 21:: Outdoor heat exchanger temperature sensor
- 22:: Exhaust temperature sensor
- 23:: Intake temperature sensor
- 24:: Exit temperature sensor
- 25:: Outside temperature sensor
- 29:: Outdoor control unit
- 30:: Indoor unit
- 31:: Cabinet
- 32:: Indoor heat exchanger
- 32A:: Indoor heat exchanger
- 32B:: Indoor heat exchanger
- 32C:: Indoor heat exchanger
- 33:: Inside fan
- 34:: Indoor heat exchanger temperature sensor
- 35:: Indoor control unit
- 35a:: Infrared receiver
- 36:: Flap
- 37:: Inside temperature sensor
- 38:: Stepping motor
- 50:: Remote controller
- 100:: Control unit
- 110:: Processor
- 120:: Memory
- 131:: Inside pressure sensor
- 132:: Outside pressure sensor

## Claims

1. An air conditioner comprising:
an indoor heat exchanger;
an outdoor heat exchanger;
an expansion valve;
a compressor; and
a control unit,
wherein the control unit increases the degree of opening of the expansion valve before switching a defrosting operation to a heating operation.

2. The air conditioner according to claim 1, wherein the control unit switches the defrosting operation to the heating operation after a lapse of a predetermined time period from when the degree of opening of the expansion valve is increased.

3. The air conditioner according to claim 1 or 2, wherein the control unit increases the degree of opening of the expansion valve either in multiple steps in a stepwise fashion, or in a non-stepwise fashion.

4. The air conditioner according to any one of claims 1 to 3, which further comprises an outside fan for the outdoor heat exchanger,
wherein the control unit drives the outside fan from rest, or increases a rotational speed of the outside fan, before switching the defrosting operation to the heating operation.

5. The air conditioner according to any one of claims 1 to 4, wherein the control unit reduces a rotational speed of the compressor before switching the defrosting operation to the heating operation.

6. The air conditioner according to any one of claims 1 to 5, wherein control unit switches the defrosting operation to the heating operation when the pressure difference of a refrigerant between the outdoor heat exchanger side and the indoor heat exchanger side becomes a value equal to or less than a predetermined value.

7. The air conditioner according to any one of claims 1 to 6, wherein the control unit increases the degree of opening of the expansion valve before switching the heating operation to the defrosting operation.
